Europäisches Patentamt

European Patent Office

Office européen des brevets

(19)

(11) Veröffentlichungsnummer: **0 467 262 A1**

# EUROPÄISCHE PATENTANMELDUNG

(12)

(21) Anmeldenummer: **91111764.6**

(22) Anmeldetag: **15.07.91**

(51) Int. Cl.5: **B25B 23/14**, G01L 5/24

(30) Priorität: **20.07.90 DE 4023070**

(43) Veröffentlichungstag der Anmeldung:
**22.01.92 Patentblatt 92/04**

(84) Benannte Vertragsstaaten:
**AT BE DE ES FR GB IT LU NL SE**

(71) Anmelder: **Kamax-Werke Rudolf Kellermann GmbH & Co. KG**
**Petershütter Allee 29**
**W-3360 Osterode am Harz(DE)**

(72) Erfinder: **Mages, Walter J., Dr.**
**Porschestrasse 20**
**W-6320 Alsfeld(DE)**
Erfinder: **Jende, Siegfried, Dipl.-Ing.**
**Petershütter Allee 41**
**W-3360 Osterode(DE)**

(74) Vertreter: **Rehberg, Elmar, Dipl.-Ing.**
**Postfach 3162 Am Kirschberge 22**
**W-3400 Göttingen(DE)**

(54) Vorrichtung zum Anziehen einer Schrauben/Mutter-Verbindung unter Ultraschalleinwirkung zu Montagezwecken.

(57) Eine Vorrichtung zum Anziehen einer Schrauben/Mutter-Verbindung unter Ultraschalleinwirkung zu Montagezwecken ist mit einer Einrichtung zum Aufbringen eines Drehmoments (1, 18, 23), einer Einrichtung (20) zum Senden, Empfangen und Verarbeiten eines Ultraschallsignals und einem auf das Werkstück (5) aufsetzbaren Prüfkopf, der einen Schwingkörper (2) mit einer Ankopplungsfläche (3) zum Ansetzen an das Werkstück (5) aufweist, ausgestattet. Die Einrichtung (1, 18, 23) zum Aufbringen des Drehmoments ist als maschinelle Antriebsspindel ausgebildet, auf der der Schwingkörper (2) integriert angeordnet ist. Die Antriebsspindel (18) weist eine Einrichtung (8) zum Festhalten des Werkstücks (5) und zu seinem Transport zum Montageort auf. Die Einrichtung (20) zum Senden, Empfangen und Verarbeiten des Ultraschallsignals ist mit dem mechanischen Antrieb der Antriebsspindel (18) im Sinne einer Beendigung des Anziehvorgangs des Werkstücks (5) bei Erreichen einer definierten Längung oder eines definierten Spannungszustands des Werkstücks (5) gekoppelt.

Fig.1

EP 0 467 262 A1

Die Erfindung bezieht sich auf eine Vorrichtung zum Anziehen einer Schrauben/Mutter-Verbindung unter Ultraschalleinwirkung zu Montagezwecken, mit einer Einrichtung zum Aufbringen eines Drehmoments, einer Einrichtung zum Senden, Empfangen und Verarbeiten eines Ultraschallsignals und einem auf das Werkstück aufsetzbaren Prüfkopf, der einen Schwingkörper mit einer Ankopplungsfläche zum Ansetzen an dem Werkstück aufweist. An Werkstücken, insbesondere an Schrauben, Muttern, Gewindestiften u. dgl. werden Ultraschallmessungen durchgeführt, nicht nur, um Fehler in dem Werkstück festzustellen, sondern Längungen infolge Krafteinwirkung zu messen bzw. um indirekt festzustellen, ob eine vorbestimmte Kraft oder Spannungsverteilung in angezogenem Zustand auf die Schrauben/Mutter-Verbindung einwirkt. Damit kann beispielsweise festgestellt werden, ob eine Schrauben/Mutter-Verbindung streckgrenzengesteuert ordnungsgemäß angezogen ist.

Aus der DE-OS 35 10 509 ist eine Vorrichtung der eingangs beschriebenen Art bekannt, die nach Art eines Drehmomentstößels für einen Handbetrieb ausgebildet ist. Der Drehmomentschlüssel weist an seinem einen Ende ein Hohlprofilteil auf, welches eine unrunde Ausnehmung besitzt, die mit einem unrunden Querschnittsprofil einer Mutter in Wirkverbindung bringbar ist. Am anderen Ende des radial zu der Schrauben/Mutter-Verbindung abstehenden Arms ist ein Handgriff angebracht. Auf dem Arm ist eine Blattfeder gelagert, die dazu ausgebildet und eingerichtet ist, um ein gehäuseartiges Teil auf das Ende einer Schraube aufzupressen und drehfest mit diesem zu verbinden. In diesem gehäuseartigen Teil ist der Schwingkopf gelagert, der von einer gefesselten Feder auf das freie Ende der Schrauben angedrückt wird. Auch dieser Schwingkopf ist drehfest mit dem Ende der Schraube verbunden. Die gefesselte Feder und die Blattfeder sind in ihren Federkräften aufeinander abgestimmt. Diese bekannte Vorrichtung setzt die Verwendung einer speziell ausgebildeten Schraube und einer ebenfalls speziell ausgebildeten Mutter voraus, wobei das freie Ende der Schraube mit einer Quernut für die drehfeste Verbindung ausgestattet ist. Für normale Elemente einer Schrauben/Mutter-Verbindung ist diese Vorrichtung nicht nutzbar. Allerdings ist es mit dieser bekannten Vorrichtung bereits möglich, in Handarbeit Schrauben/Mutter-Verbindungen anzuziehen und während des Anziehvorgangs eine eintretende Längung der Schraube vermittels der Ultraschalleinwirkung zu messen bzw. zu beobachten. Für kurze Taktzeiten, wie sie beispielsweise an Roboter-Montagestraßen für die Automobilindustrie zur Verfügung stehen, ist diese Vorrichtung nicht geeignet.

Aus der US-PS 3 810 385 ist eine Vorrichtung bekannt, die eine Einrichtung zum Senden, Empfangen und Verarbeiten eines Ultraschallsignals aufweist. Mit dieser Einrichtung ist ein Prüfkopf gekuppelt, der einen Schwingkörper mit einer Ankoppelfläche zum Ansetzen an das Werkstück aufweist. Hier wird eine normale Schrauben/Mutter-Verbindung angezogen, wobei der Prüfkopf mit dem Schwingkörper auf den Kopf der stillstehenden Kopfschraube aufgesetzt wird, während von der anderen Seite die Mutter angezogen wird. Der Schwingkopf kann im Bereich der Ankoppelfläche, die dem Werkstück zugekehrt angeordnet ist, mit einer Beschichtung versehen sein. Auch ist es möglich, hier von Hand eine die Ankopplung verbessernde Flüssigkeit auf den Kopf der Kopfschraube aufzubringen. Auch diese bekannte Vorrichtung ist, obwohl sie tragbar ausgebildet ist, nur für Handbetrieb und für eine stichprobenartige Untersuchung geeignet. Eine Serienmontage mit kurzen Taktzeiten kann mit ihr nicht durchgeführt werden.

Die beiden bekannten Vorrichtungen sehen jeweils vor, daß die Mutter einer Schrauben/Mutter-Verbindung angezogen wird, während die Schraube stillsteht. Es gibt jedoch oft Montagebedingungen, bei denen die Schraube gedreht werden muß, beispielsweise dann, wenn diese in ein Gewinde in einem Sackloch eingedreht werden soll. Mit den bekannten Vorrichtungen ist dies nicht möglich, weil der Schwingkörper so ausgebildet und angeordnet ist, daß er während der Ultraschallmessung stillsteht.

Der Erfindung liegt die Aufgabe zugrunde, eine Vorrichtung der eingangs beschriebenen Art bereitzustellen, die für eine automatische Montage in der Großserie, insbesondere bei kurzen Taktzeiten, auch in der Größenordnung von 20 bis 25 sec, zum Anziehen einer Schraube einsetzbar ist. Die Erfindung zielt damit darauf ab, eine Vorrichtung zu schaffen, mit deren Hilfe das Anziehen von Schrauben, Muttern o. dgl. automatisiert werden kann.

Erfindungsgemäß wird dies dadurch erreicht, daß die Einrichtung zum Aufbringen des Drehmoments als mechanische Antriebsspindel ausgebildet ist, auf der der Schwingkörper integriert angeordnet ist, daß die Antriebsspindel eine Einrichtung zum Festhalten des Werkstücks und zu seinem Transport zum Montageort aufweist, und daß die Einrichtung zum Senden, Empfangen und Verarbeiten des Ultraschallsignals mit dem mechanischen Antrieb der Antriebsspindel im Sinne der Beendigung des Anziehvorgangs des Werkstücks bei Erreichen einer definierten Längung oder eines definierten Spannungszustands des Werkstücks gekoppelt ist.

Die Vorrichtung kann im Rahmen einer automatischen bzw. maschinellen Prüfvorrichtung, also ohne direkte Handhabung des Schwingkörpers durch den Menschen, eingesetzt werden. Die Vorrichtung kann sogar in einer Montagelinie, beispielsweise am Fließband in der Automobilindustrie, eingesetzt werden, wobei das Montageergebnis, insbesondere das Anziehen der Schraube nach dem Drehmoment, Drehwinkel oder streckgrenzgesteuert über die Längung der Schraube und/oder nach Erreichen eines bestimmten Spannungszustands, durch eine Ultraschallmessung überprüft bzw. nachkontrolliert werden kann. Damit ist es auch möglich, die neue Vorrichtung innerhalb eines automatischen ultraschall-gesteuerten Anzugsverfahrens für die Schrauben/Mutter-Verbindung zu nutzen, bei welchem der Abschaltpunkt der Antriebsspindel zur Aufbringung des Anzugsmoments durch das Meßergebnis bestimmt wird. Bei Erreichen der vorgesehenen Längung der Schraube oder des Eintritts des Spannungszustands wird die Antriebsspindel stillgesetzt und das Drehmoment nicht mehr verlängert. Der ordnungsgemäße Montagezustand ist damit erreicht. Die Aussendung, der Empfang und die Verarbeitung der Ultraschallsignale können vorteilhaft in kurzen Taktzeiten direkt an der Entstehungsstelle abgenommen werden, wobei Taktzeiten in der Größenordnung von 20 sec erreichbar sind, wie sie im Automobilbau nicht unüblich sind. Auf jeden Fall ist es mit der neuen Vorrichtung im Sinne einer Kontrolle möglich, den Anzugsvorgang ordnungsgemäß zu überwachen und festzustellen, ob z. B. eine Schraube oder Mutter ordnungsgemäß angezogen ist. Die Längung der Schraube unter der Vorspannkraft ist ein Maß für die Vorspannkraft.

Mit der neuen Vorrichtung ist es möglich, den Anziehvorgang in Abhängigkeit von dem jeweiligen Meßergebnis bzw. Ultraschallsignal zu steuern bzw. zu beenden, um in der Serienmontage Verbindungselemente reproduzierbar anzuziehen. Beim automatischen Verschrauben mit mehreren Antriebsspindel können sich Interferenzen störend auswirken, so daß die Ultraschallsignale nicht mehr einwandfrei übertragen werden. Um dies weitgehend zu vermeiden, können die Antriebsspindeln aus einem Material mit Dämpfungseigenschaften hergestellt werden. Hierzu ist jedes Material mit einem niedrigen E-Modul, wie z. B. Bronze, Aluminium o. dgl., geeignet. Eine andere Möglichkeit besteht darin, einen Dämpfungskörper mit z. B. Hartgummischichten in den Spindelaufbau einzubeziehen.

Der Schwingkörper ist in der Antriebsspindel begrenzt axial verschiebbar gelagert und auf einer gefesselten Feder abgestützt. Durch diese gefesselte Feder wird in Verbindung mit einem Überstand des Schwingkörper relativ zu der Antriebsspindel eine reproduzierbare Kraft geschaffen, mit der der Schwingkörper an der Ankoppelfläche auf das Werkstück angepreßt wird. Die Anpreßkraft wird während der Messung damit konstantgehalten.

Der Schwingkörper ist zweckmäßig mit einem ein Verkanten der Ankoppelfläche ausschließenden radialen Spiel gelagert. Dabei kann ein Verkantungswinkel bis zu 5 oder auch bis zu 10° zugelassen werden. So ist es möglich, daß die Aufsatzfläche am Werkstück, an welchem der Schwingkörper zur Anlage kommt, vergleichsweise uneben ausgebildet sein kann, verschmutzt sein kann oder mit einer Aufwölbung versehen sein kann. Solche Fehler wirken sich nicht negativ aus, wenn ein genügend großes radiales Spiel zwischen Schwingkörper und Antriebsspindel vorgesehen ist, also eine Gleitführung zwischen den Teilen, die es immer noch zuläßt, daß sich die Ankoppelfläche des Schwingkörpers nach der Lage der Kontaktfläche am Werkstück ausrichtet. Dabei ist die vorgespannte Feder zwar etwas anders zusammengedrückt als bei koaxial fluchtender Anordnung zwischen Schwingkörper und Werkstück; die Unterschiede sind jedoch nicht so gravierend und haben auf das Meßergebnis kaum negativen Einfluß.

Eie Einrichtung zum Festhalten und zum Transport übt im Gegensatz zum Stand der Technik eine Doppelfunktion aus. Es wird nicht nur die Verbindung zum Werkstück zum Zweck des Ankoppelns des Schwingkörpers genutzt, sondern gleichzeitig auch eine Art Greif- oder Haftfunktion zwischen Antriebsspindel und Werkstück, um das Werkstück z. B. aus einem Magazin aufzunehmen und zum Montageort zu transportieren und zu überführen. Die hierzu dienende Einrichtung kann unterschiedlich ausgebildet sein. Eine erste Möglichkeit besteht darin, daß die Einrichtung zum Festhalten und zum Transport im wesentlichen einen Magneten aufweist, der auf der Antriebsspindel ortsfest gelagert ist. Der Magnet ist so dimensioniert, daß seine Kraft größer als die Kraft der gefesselten Feder in zusammengedrücktem Zustand. Der Magnet kann als ringförmiger Permanentmagnet ausgebildet sein. Dies stellt eine besonders einfache Ausführungsform dar, die insbesondere für kleine Schlüsselweiten Anwendung finden kann. Es ist aber auch möglich, den Magneten als Elektromagnet auszubilden; dies ist insbesondere bei automatischen Prüf- und Montageanlagen sinnvoll. Beim Abnehmen der Antriebsspindel vom Werkstück ergeben sich hiermit vorteilhaft geringe Abzugskräfte, wenn der Elektromagnet vorher ausgeschaltet oder umgepolt worden ist.

Eine andere Möglichkeit besteht darin, daß die Einrichtung zum Festhalten und zum Transport im wesentlichen Ansaugöffnungen für das Werkstück aufweist, die an eine Unterdruckquelle anschließbar sind. Das Werkstück wird dann durch Vakuum an der Antriebsspindel gehalten, wobei das Vakuum zumindest solange aufrechterhalten bleibt, bis der Transportvorgang und der Anziehvorgang abgeschlossen sind.

In der Antriebsspindel kann ein Kanal zum Hindurchleiten eines Ankoppelmediums vorgesehen sein. Es versteht sich, daß dieser Kanal mit einem Vorratsbehälter für Ankoppelmedium und einer impulsweise betätigbaren Pumpe versehen ist, so daß bei jedem Schraubvorgang eine entsprechende Menge Ankoppelmedium auf die Kontaktfläche am Werkstück aufgebracht werden kann.n Auch das Ankoppelmedium wird damit automatisch zwischen die Ankopplungsfläche des Schwingkörpers und der Kontaktfläche des Werkstücks geleitet.

Die Antriebsspindel kann mit Schleifringen zur Übertragung der Ultraschallsignale versehen sein, wobei die Schleifringe Bestandteile eines Anpassungsnetzwerks sein können. Auf diese Weise können die Ultraschallsignale trotz Verdrehung der Antriebsspindel aus diesem herausgeführt und der Einrichtung zum Senden, Empfangen und Verarbeiten des Ultraschallsignals zugeführt werden.

In der Antriebsspindel kann ein Kanal für das Durchleiten eines Reinigungsmediums für den dem Werkstück zugekehrten Teil des Schwingkörpers und/oder der Antriebsspindel vorgesehen sein. Als Reinigungsmedium kommt in erster Linie Luft, aber auch eine Reinigungsflüssigkeit, wie beispielsweise Wasser, in Frage. Das Reinigungsmedium wird nach Beendigung eines Anschraubvorgangs eingesetzt, um die Ankopplungsfläche des Schwingkörpers und die sonstigen Kontaktflächen der Antriebsspindel von Metallteilchen, Schmutz u. dgl. zu reinigen, um immer wieder reproduzierbare eindeutige Bedingungen an der Antriebsspindel und dem Schwingkörper bei der automatischen Montage zu schaffen. Es ist auch möglich, die Antriebsspindel mit einer Bürste zum Reinigen des der Antriebsspindel zugekehrten Teils des Werkstücks zu versehen. Bei der automatischen Montage kann die Bürste an der Antriebsspindel zunächst über das Werkstück geführt werden, um die dort vorgesehene Kontaktfläche zu reinigen und die gereinigte Fläche mit der Kontaktfläche am Schwingkörper in Kontakt zu bringen.

Der Magnet im Bereich der Antriebsspindel kann eine Aufsetzfläche aufweisen, mit der er mit dem Werkstück in Kontakt kommt. Dies ist insbesondere dann wichtig, wenn sich der Magnet direkt auf dem Werkstück aufsetzt. Es ist allerdings auch möglich, daß das direkte Aufsetzen an einer anderen Stelle der Antriebsspindel erfolgt und im Bereich des Magneten nur eine vergleichsweise Annäherung zum Werkstück erfolgt, wobei die Anziehungskräfte des Magneten einen geringen Spalt überbrücken müssen.

Auf der Aufsetzfläche des Magneten und/oder auf dem Schwingkörper kann eine dünne Zwischenlage aus elastischem Material angeordnet sein. Diese dient der Überbrückung von Ungänzen oder leichten Erhöhungen und verbessert insoweit die Ankopplungseigenschaften der Antriebsspindel an der Kontaktfläche des Werkstücks.

Die Feder in der Antriebsspindel kann auswechselbar angeordnet und/oder in ihrer Vorspannkraft einstellbar ausgebildet sein. Es versteht sich, daß statt einer Feder auch mehrere Federn Verwendung finden können, die konzentrisch oder exzentrisch zueinander vorgesehen sein können. Die auswechselbare Anordnung der Feder bzw. der Federn kann dem Zweck dienen, gealterte Federn, bei denen eine Veränderung der Vorspannkraft vorliegt, leicht austauschen zu können. Auch bei einem Federbruch ist ein Wechsel der Feder sinnvoll. Schließlich ergibt sich auf diese Art und Weise die Möglichkeit, durch Austausch mit anderen Federn die Vorspannkraft gezielt zu verändern und an den jeweiligen Anwendungsfall anzupassen. Dem zuletzt genannten Zweck dient es auch, wenn die Feder in ihrer Vorspannkraft einstellbar ausgebildet ist. Dies kann durch Hinzufügung bzw. Wegnahme von Beilagescheiben geschehen. Eine andere Realisierungsmöglichkeit ist darin gegeben, eines der beiden Federauflager durch einen über eine Stellschraube getragenen Federteller äverschieblich zu gestalten, um auf diese Art und Weise die Vorspannkraft einzustellen.

Bevorzugte Ausführungsformen der Vorrichtung sind in den Zeichnungen dargestellt und werden im Folgenden beschrieben. Es zeigen:

Figur 1     eine erste Ausführungsform der Vorrichtung zum Anziehen von Schrauben,

Figur 2     eine zweite Ausführungsform,

Figur 3     eine dritte Ausführungsform,

Figur 4     eine Ausführungsform für Innensechskantschrauben,

Figur 5     eine Ausführungsform zum Anziehen von Muttern und

Figur 6     eine weitere Ausführungsform der Vorrichtung zum Anziehen von Muttern.

In den Figuren ist der wesentliche Teil 1 der Vorrichtung, der zum Messen und Anziehen dient, jeweils in Halbschnittdarstellung verdeutlicht. Er weist einen Schwingkörper 2 auf, der im Einzelnen wiederum aus verschiedenen Teilen zusammengesetzt sein kann und beispielsweise einen Dämpfungskörper, verschiedene Schutzschichten und eine Ankopplungsfläche 3 besitzt. Die Gesamtheit dieser Teile kann auch als Prüfkopf bezeichnet werden. Vom Prüfkopf bzw. Schwingkörper 2 führt ein Anpassungsnetzwerk 4 zum Ausgang bzw. zu einer Einrichtung zum Senden, Empfangen und Verarbeiten eines Ultraschallsignals.

Es ist ein anzuziehendes Werkstück 5, hier in Form einer Kopfschraube, mit einer Kontaktfläche 6 dargestellt, wobei die Ankopplungsfläche 3 auf die Form der Kontaktfläche 6 abgestimmt ist; beispielsweise sind beide Flächen 3 und 6 eben ausgebildet. Auf die Ankopplungsfläche 3 oder die Kontaktfläche 6 wird ein Kopplungsmedium 7 aufgebracht, welches in der Regel aus einer Flüssigkeit bestehen kann.

Der Teil 1 der Vorrichtung weist einen Magneten 8 auf, der hülsenförmig oder auch gehäuseartig ausgebildet sein kann und eine Aufsetzfläche 9 aufweist, die der Oberfläche des Werkstücks 5 ebenfalls zugeordnet ist. In seinem Innern weist der Magnet 8, der hier als Permanentmagnet ausgebildet ist, eine Bohrung 10 auf, die als zylindrische Bohrung ausgebildet ist. In dieser zylindrischen Bohrung 10 ist der Schwingkörper 2 in einer Gleitführung 11 mit radialem Spiel begrenzt verschiebbar gelagert. Dieses radiale Spiel ist so bemessen, daß der Schwingkörper 2 sich auch verkanten kann, ohne in der Gleitführung 11 seine Beweglichkeit zu verlieren. In einem Federraum 12 in der Bohrung ist eine Feder 13, die hier als Zylinderfeder ausgebildet ist, vorgesehen. Ein in einer Nut 14 gelagerter Sicherungsring 15 hält den Magneten 8 ortsfest am Teil 1. Der Schwingkörper 2 steht um einen axialen Verschiebeweg 16 gegenüber dem Magneten 8 stirnseitig vor, oder anders gesagt, der Schwingkörper 2 wird beim Aufsetzen auf das Werkstück 5 um den Verschiebeweg 16 axial verschoben, so daß die Aufsetzfläche 9 und die Ankopplungsfläche 3 in einer Ebene liegen. Die Feder 13 ist gefesselt und unter Vorspannung in dem Federraum 12 untergebracht.

Der Teil 1 weist ein Gehäuse 17 auf, welches an seinem oberen Ende in eine Antriebsspindel 18 übergeht bzw. mit einer solchen Antriebsspindel 18 verbunden sein kann. Es ist wichtig, daß die Antriebsspindel 18 radial wenig auslädt; sie darf insbesondere nicht aus einem schlüsselartigen Hebelarm bestehen, sondern muß Bestandstand einer maschinellen Vorrichtung sein, die auch bei beengten Platzverhältnissen einsetzbar ist. Der Magnet 8 und der Schwingkörper 2 sind in dem Gehäuse 17 gelagert, wobei der Magnet 8 in einer Bohrung 19 des Gehäuses 17 mit Festsitz aufgenommen ist und durch den Sicherungsring 15 fixiert ist. Die Bohrung 10 im Magneten 8 ist hier gestuft ausgebildet und bildet mit einer Stufe 21 einen Anschlag für die begrenzt verschiebbare Lagerung des Schwenkkörpers 2. Das Gehäuse 17 des Teils 1 weist auf der Antriebsspindel 18 abgekehrten Seite eine Fortsatz 22 auf, der eine Schlüsselangriffsfläche 23 auf einem Innenumfang trägt, über die letztendlich ein Kopf 24 einer Schraube 25, die das Werkstück 5 darstellt, angezogen werden kann. Es versteht sich, daß die Kontaktfläche 6 oben am Kopf 24 der Schraube 25 vorgesehen ist, an der nicht nur die Aufsetzfläche 9 des Magneten 8, sondern unter Zusammendrückung der Feder 13 auch die Ankopplungsfläche 3 des Schwingkörpers 2 zur Anlage gelangen. Das Anpassungsnetzwerk 4 führt vom Schwingkörper 2 zu einem am Gehäuse 17 angeordneten Schleifring 26, dem ein ortsfester Schleifring 27 zugeordnet ist, der relativ zu dem Teil 1 und außerhalb desselben gelagert ist. Das Anpassungsnetzwerk 4 setzt sich fort bis zu einer Einrichtung 20 zum Senden, Empfangen und Verarbeiten von Ultraschallsignalen. Auf diese Weise ist es möglich, Ultraschallsignale zwischen stillstehenden und drehenden Teilen zu übertragen. Ein Kanal 28 dient der Zuleitung von Koppelmedium 7 auf die Kontaktfläche 6 des Werkstücks bzw. der Schraube 25. In aufgesetztem Zustand liegen die Aufsetzfläche 9 und die Ankoppelfläche 3 an der Kontaktfläche 6 in Anlage, wobei sie lediglich über das Kopplungsmedium 7 voneinander getrennt sind. Während des Messens und Anziehens der Schraube 25 ist der Schwingkörper 2 um den Verschiebeweg 16 relativ in dem Magneten 8 eingefahren und die Feder 13 auf einen bestimmten Vorspannweg und somit mit definierter Kraft zusammengedrückt. Diese Kraft wird während des gesamten Anziehvorgangs konstantgehalten. Der Magnet 8 hat nicht nur die Aufgabe, die konstante Vorspannkraft vermittels der Feder 13 auf das Werkstück 5 aufzubringen. Der Magnet 8 wird gleichzeitig benutzt, um das Werkstück 5 beispielsweise von einem Magazin zum Montageort zu transportieren.

Eine elektrische Leitung 36 führt von der Einrichtung 20 zur Verarbeitung der Ultraschallsignale zu einem Motor 37, über welchen der Antrieb auf die Antriebsspindel 18 gelangt. Damit ergibt sich vorteilhaft die Möglichkeit einer automatischen Montage unter reproduzierbaren Bedingungen. Das Anziehen des Werkstücks 5 bzw. der Schraube 25 erfolgt über die sich drehende Antriebsspindel 18, wobei gleichzeitig über die Ultraschallimpulse die Längung der Schraube 25 und/oder der sich infolge des Anziehvorgangs einstellende Spannungszustand in der Schraube 25 gemessen werden. Beim Erreichen einer bestimmten vorgesehenen Längung oder eines bestimmten vorgesehenen Spannungszustands in der Schraube 25 setzt die Einrichtung 20 den Motor 23 still und der Anziehvorgang über die Antriebsspindel 18 wird beendet. Der Endpunkt des Anziehvorgangs, also das Abschalten des Motors 37, kann an der Einrichtung 20 eingestellt werden.

Der Magnet 8 kann als Permanentmagnet ausgebildet werden. Es ist jedoch auch möglich, hier einen Elektromagneten zu verwenden und diesen in den montagefreien Zwischenzeiten umzupolen, damit die Aufsetzfläche 9 von anhaftenden Metallspänen o. dgl. gesäubert wird.

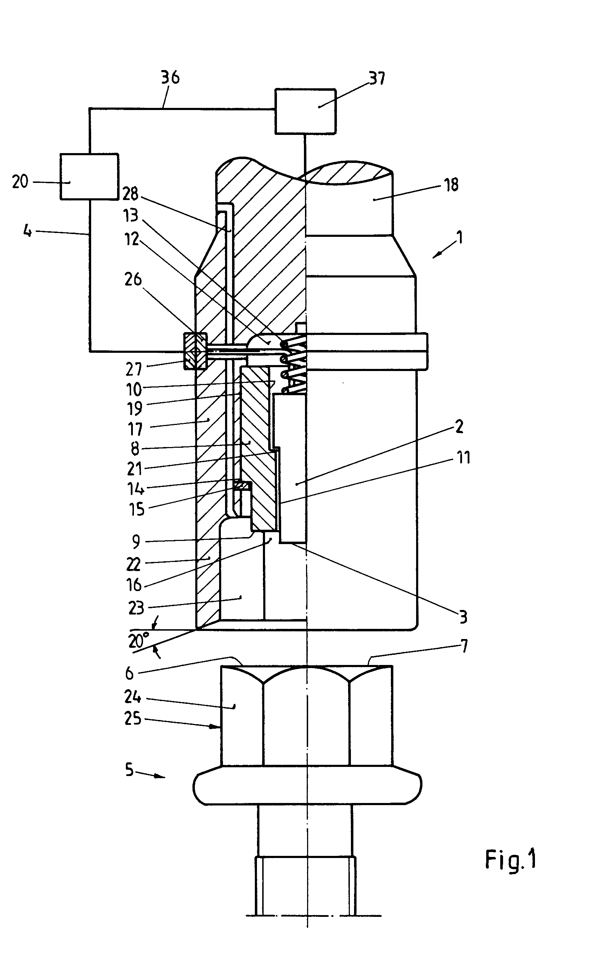

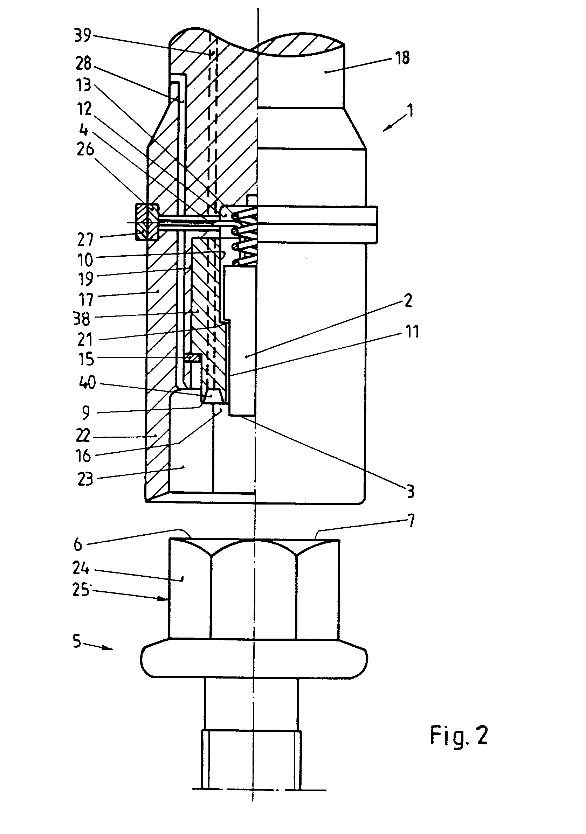

Figur 2 zeigt eine ähnliche Ausführungsform wie Figur 1, jedoch ist anstelle des Magneten 8 ein Pneumatikkörper 38 vorgesehen, der mit einem Ansaugkanal 39 verbundene Ansaugöffnungen 40 trägt, die in der Aufsetzfläche 9 offen enden. Damit ist hier eine Ausführungsform gezeigt, bei der das Werkstück 5 unter Vakuum aufgenommen, transportiert und angezogen werden kann. Der Ansaugkanal 39 kann auch genutzt werden, um ein Reinigungsmedium, beispielsweise Luft, in den Zwischenzeiten hindurchzudrücken, wenn kein Werkstück in dem Teil 1 aufgenommen ist. Es erfolgt dann die Reinigung der Aufsetzfläche 9 und der Ankopplungsfläche 3.

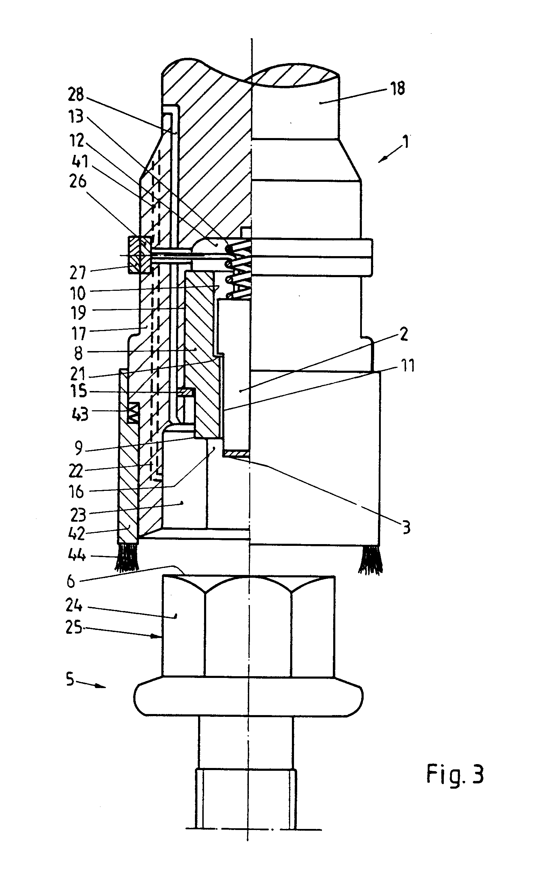

Bei der Ausführungform gemäß Figur 3 ist der Schwingkörper 2 mit einer Zwischenlage 35 versehen, auf deren freier Seite die Ankopplungsfläche 3 gebildet ist. Die Zwischenlage 35 ist aus elastischem Material ausgebildet und wirkt mit dem radialen Spiel zusammen. Sie erlaubt es darüberhinaus, Ungänzen und örtliche Erhöhungen sowie Vertiefungen in der Kontaktfläche 6 zu überbrücken. Es ist hier zusätzlich ein Kanal 41 für ein Reinigungsmedium vorgesehen, der in düsenartigen, gerichteten Öffnungen endet, die relativ zu der Aufsetzfläche 9 und der Ankopplungsfläche 3 vorgesehen sind.

Am äußeren Umfang des Teils 1, den Fortsatz 22 umgebend, ist ein Bürstenträger 42 angeordnet, der auf einer Druckfeder 43 beweglich gelagert ist und an seiner freien Stirnkante eine Bürste 44 aufweist. Damit ist es möglich, vor der Aufnahme der Schraube 25 mit der Bürste 44 etwa senkrecht zur Achse des Teils 1 über die Kontaktfläche 6 zu fahren und diese von Schmutz und anhaftenden Metallteilchen zu reinigen, bevor die Paarungsfindung über den Fortsatz 22 am Kopf 24 stattfindet und die Kontaktfläche 6 in den Wirkbereich des Magneten 8 gerät.

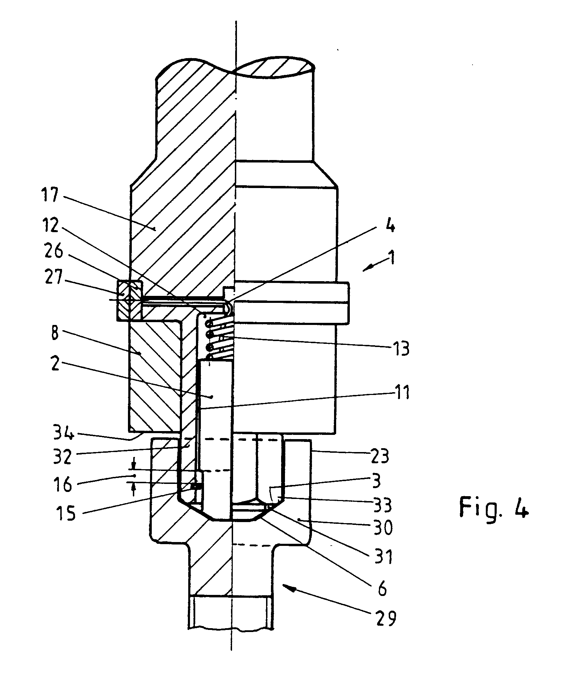

Figur 4 zeigt eine ganz ähnliche Ausführungsform der Vorrichtung wie die vorangehenden Figuren, jedoch in Anwendung auf eine Innensechskantschraube 29 als Werkstück 5. Die Innensechskantschraube 29 weist im Bereich ihres Kopfs 30 eine Ausnehmung 31 auf, die am Boden die hier schräg ausgebildete Kontaktfläche 6 bildet. Figur 4 zeigt die Relativlage der Teile während der Messung. Die Ankopplungsfläche 3 am Schwingkörper 2 ist hier als Schrägfläche ausgebildet und der schrägen Kontaktfläche 6 zugeordnet. Ein Fortsatz 32 am Gehäuse 17 weist eine Schrägfläche 33 auf, die an der Kontaktfläche 6 zur Anlage kommt und deren Funktion der Aufsetzfläche 9 der Ausführungsbeispiele der Figuren 1 bis 3 vergleichbar ist. Jedenfalls bestimmt die Schrägfläche 33 den Verschiebeweg 16. Eine Stirnfläche 34 am Magneten 8, der hier außen am Fortsatz 33 des Gehäuses 17 ortsfest gelagert ist, kommt am Kopf 30 der Innensechskantschraube 29 nicht zur Anlage. Allerdings ist der dort vorgesehene geringe Abstand so bemessen, daß sich eine ausreichend hohe Magnetkraft zwischen dem Magneten 8 und dem Kopf 30 der Innensechskantschraube 29 aufbauen kann, welche zur vorgesehenen Zusammendrückung der Feder 13 mit der reproduzierbar festgelegten Vorspannkraft ausreicht. Die Gleitführung 11 ist hier zwischen dem Schwingkörper 2 und dem Fortsatz 32 vorgesehen. Die Funktion des Anschlags für die Unterbringung der gefesselten Feder 13 im Federraum 12 erfüllt hier der Sicherungsring 15, der in einer Nut im Fortsatz 32 untergebracht ist.

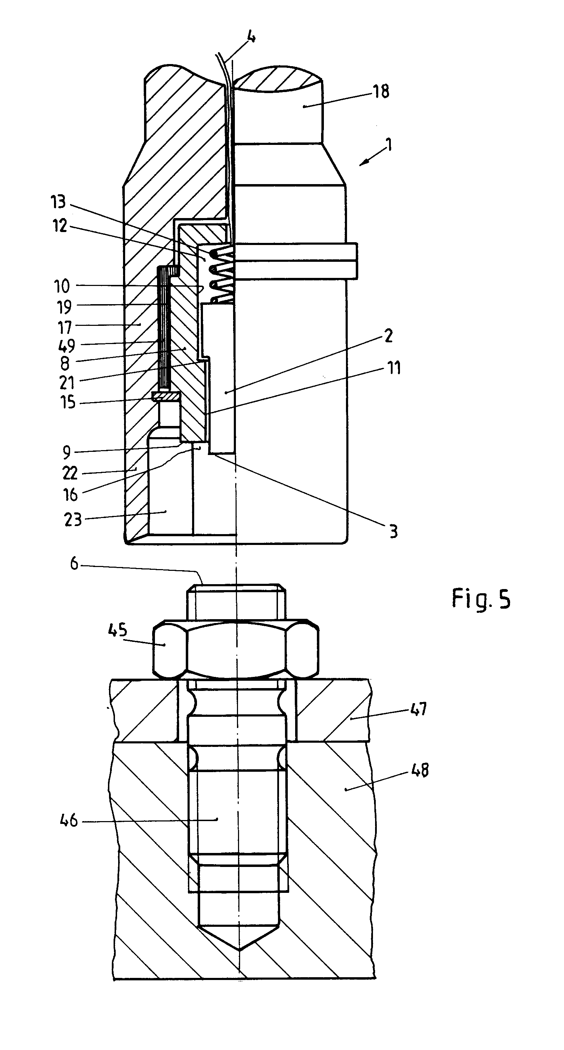

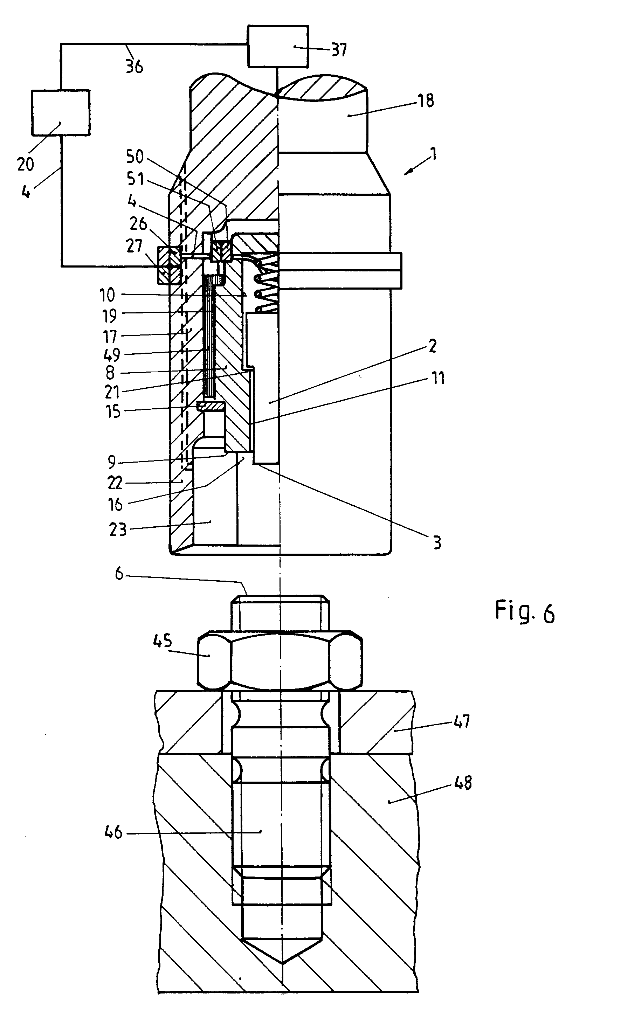

Die Figuren 5 und 6 zeigen Ausführungsformen der Vorrichtung, die nicht zum Anziehen einer Schraube, sondern einer Mutter 45 ausgebildet ist, die in Verbindung mit einer Stiftschraube 46 eingesetzt wird. Die Stiftschraube 46 ist in eine Gewindebohrung eingedreht. Zwei miteinander zu verbindende Teile 47 und 48 werden durch Anziehen der Mutter 45 gesichert. Es versteht sich, daß die Kontaktfläche 6 auf dem oberen Ende der Stiftschraube 46 angeordnet ist, während dennoch die Schlüsselansatzfläche 23 auf den Umfang der Mutter 45 abgestimmt ist und mit dieser zusammenarbeitet. Während des Anziehens der Mutter stehen der Schwingkörper 2 und der Magnet still, d. h. er nimmt nicht an der Rotation des Gehäuses 17 mit dem Fortsatz 22 teil. Um dies zu ermöglichen, ist eine Gleitlagerbuchse 49 zwischen Magnet 8 und Gehäuse 17 vorgesehen. Da der Schwingkörper 2 stillsteht, besteht eine Möglichkeit, das Anpassungsnetzwerk 4 zentrisch in der Achse der hohl ausgebildeten Antriebsspindel 18 nach außen zu führen. Statt der Gleitlagerbuchse 49 kann auch ein Axialrillenkugellager in Verbindung mit einem Radialnadellager Verwendung finden.

Figur 6 zeigt eine Ausführungsform, bei der der Magnet 8 ebenfalls topfartig ausgebildet ist. Die Signaldurchführung erfolgt jedoch radial, und zwar mit Hilfe von zwei weiteren Schleifringen 50 und 51.

**Bezugszeichenliste:**

| | | |
|---|---|---|
| 1 | = | Teil |
| 2 | = | Schwingkörper |
| 3 | = | Ankopplungsfläche |
| 4 | = | Anpassungsnetzwerk |
| 5 | = | Werkstück |
| 6 | = | Kontaktfläche |
| 7 | = | Kopplungsmedium |
| 8 | = | Magnet |
| 9 | = | Aufsetzfläche |
| 10 | = | Bohrung |
| 11 | = | Gleitführung |
| 12 | = | Federraum |
| 13 | = | Feder |
| 14 | = | Nut |
| 15 | = | Sicherungsring |
| 16 | = | Verschiebeweg |

17 = Gehäuse
18 = Antriebsspindel
19 = Bohrung
20 = Einrichtung
21 = Stufe
22 = Fortsatz
23 = Schlüsselansetzfläche
24 = Kopf
25 = Schraube
26 = Schleifring
27 = Schleifring
28 = Kanal
29 = Innensechskantschruabe
30 = Kopf
31 = Ausnehmung
32 = Fortsatz
33 = Schrägfläche
34 = Stirnfläche
35 = Zwischenlage
36 = elektrische Leitung
37 = Motor
38 = Pneumatikkörper
39 = Ansaugkanal
40 = Ansaugöffnung
41 = Kanal
42 = Bürstenträger
43 = Druckfeder
44 = Bürste
45 = Mutter
46 = Stiftschraube
47 = Teil
48 = Teil
49 = Gleitlagerbuchse
50 = Schleifring
51 = Schleifring

**Patentansprüche**

1. Vorrichtung zum Anziehen einer Schrauben/Mutter-Verbindung unter Ultraschalleinwirkung zu Montagezwecken, mit einer Einrichtung zum Aufbringen eines Drehmoments, einer Einrichtung zum Senden, Empfangen und Verarbeiten eines Ultraschallsignals und einem auf das Werkstück aufsetzbaren Prüfkopf, der einen Schwingkörper mit einer Ankopplungsfläche zum Ansetzen an dem Werkstück aufweist, dadurch gekennzeichnet, daß die Einrichtung zum Aufbringen des Drehmoments als maschinelle Antriebsspindel (18) ausgebildet ist, auf der der Schwingkörper (2) integriert angeordnet ist, daß die Antriebsspindel (18) eine Einrichtung zum Festhalten (8, 38) des Werkstücks (5) und zu seinem Transport zum Montageort aufweist, und daß die Einrichtung zum Senden, Empfangen und Verarbeiten (20) des Ultraschallsignals mit dem mechanischen Antrieb der Antriebsspindel (18) im Sinne der Beendigung des Anziehvorgangs des Werkstücks (5) bei Erreichen einer definierten Längung oder eines definierten Spannungszustands des Werkstücks gekoppelt ist.

2. Vorrichtung nach Anspruch 1, dadurch gekennzeichnet, daß der Schwingkörper (2) in der Antriebsspindel (18) begrenzt axial verschiebbar gelagert ist und auf einer gefesselten Feder (13) abgestützt ist.

3. Vorrichtung nach Anspruch 2 und 2, dadurch gekennzeichnet, daß der Schwingkörper (2) mit einem ein Verkanten der Ankopplungsfläche (3) ausschließenden radialen Spiel gelagert ist.

4. Vorrichtung nach Anspruch 2, dadurch gekennzeichnet, daß die Einrichtung zum Festhalten und zum Transport im wesentlichen einen Magneten (8) aufweist, der auf der Antriebsspindel (18) ortsfest gelagert ist.

5. Vorrichtung nach Anspruch 1, dadurch gekennzeichnet, daß die Einrichtung zum Festhalten und zum Transport im wesentlichen Ansaugöffnungen (40) für das Werkstück (5) aufweist, die an eine Unterdruckquelle anschließbar sind.

6. Vorrichtung nach Anspruch 1, dadurch gekennzeichnet, daß in der Antriebsspindel (18) ein Kanal (28) zum Hindurchleiten eines Ankoppelmediums vorgesehen ist.

7. Vorrichtung nach Anspruch 1, dadurch gekennzeichnet, daß die Antriebsspindel (18) mit Schleifringen (26, 27) zur Übertragung der Ultraschallsignale versehen ist.

8. Vorrichtung nach Anspruch 1, dadurch gekennzeichnet, daß in der Antriebsspindel (18) ein Kanal (41) für das Durchleiten eines Reinigungsmediums für den dem Werkstück (5) zugekehrten Teil des Schwingkörpers (2) und/oder der Antriebsspindel (18) vorgesehen ist.

9. Vorrichtung nach Anspruch 1, dadurch gekennzeichnet, daß die Antriebsspindel (18) mit einer Bürste (44) zum Reinigen des der Antriebsspindel zugekehrten Teils des Werkstücks (5) versehen ist.

10. Vorrichtung nach Anspruch 4, dadurch gekennzeichnet, daß der Magnet (8) eine Aufsetzfläche (9) aufweist, mit der er mit dem Werkstück (5) in Kontakt kommt.

**11.** Vorrichtung nach einem der Ansprüche 1 bis 10, dadurch gekennzeichnet, daß auf der Aufsetzfläche (9) des Magneten (8) und/oder auf dem Schwingkörper (2) eine dünne Zwischenlage (35) aus elastischem Material angeordnet ist.

**12.** Vorrichtung nach Anspruch 1 bis 11, dadurch gekennzeichnet, daß die Feder (13) in der Antriebsspindel (18) auswechselbar angeordnet und/oder in ihrer Vorspannkraft einstellbar ausgebildet ist.

Fig.1

Fig. 2

Fig. 3

Fig. 4

Fig. 5

13

Fig. 6

| | EINSCHLÄGIGE DOKUMENTE | | EP 91111764.6 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int Cl⁵)** |
| X | DD - A - 207 039 (HEINRICH, DETLEF et al.) * Fig. 2 * -- | 1,2,7 | B 25 B 23/14 G 01 L 5/24 |
| A | GB - A - 2 200 212 (HONDA GIKEN KOGYO KABUSHIKI KAISHA) * Fig. 6 * -- | 1 | |
| A | GB - A - 2 176 727 (VEB CHEMIEANLAGENBAUKOMBINAT LEIPZIG-GRIMMA) * Fig. 2 * -- | 1 | |
| A | FR - A1 - 2 550 982 (CENTRE TECHNIQUE DES INDUSTRIES MECANIQUES) * Fig. 3 * ---- | 1 | |
| | | | **RECHERCHIERTE SACHGEBIETE (Int. Cl⁵)** |
| | | | B 25 B 23/00 G 01 L 5/00 |

Der vorliegende Recherchenbericht wurde für alle Patentansprüche erstellt.

| Recherchenort | Abschlußdatum der Recherche | Prüfer |
|---|---|---|
| WIEN | 05-09-1991 | BENCZE |